# FASCICULE DE BREVET EUROPEEN

(11) **EP 3 297 850 B1**
(45) Date de publication et mention de la délivrance du brevet: **03.07.2019**
(21) Numéro de dépôt: 16721451.9
(22) Date de dépôt: 11.05.2016
(51) Int. Cl.: B60C 9/20

(54) **PNEUMATIQUE COMPORTANT DES COUCHES DE TRAVAIL CONSTITUEES DE FILS UNITAIRES**
REIFEN MIT DURCH INDIVIDUELLE DRÄHTE GEFORMTEN ARBEITSSCHICHTEN
TYRE COMPRISING WORKING LAYERS FORMED BY INDIVIDUAL WIRES

(30) Priorité: 18.05.2015 FR 1554393
(43) Date de publication de la demande: 28.03.2018
(73) Titulaire: Compagnie Générale des Etablissements Michelin, 63000 Clermont-Ferrand (FR)
(72) Inventeur: NAVARRO-LOSADA, Claudia, 63040 Clermont-Ferrand Cedex 9 (FR); LARDJANE, Aurore, 63040 Clermont-Ferrand Cedex 9 (FR); PARMENTIER, Jean-François, 63040 Clermont-Ferrand Cedex 9 (FR); MARTIN, Vincent, 63040 Clermont-Ferrand Cedex 9 (FR); SALGUES, Nathalie, 63040 Clermont-Ferrand Cedex 9 (FR)
(74) Mandataire: Le Cam, Stéphane Georges Elie
(86) Numéro de dépôt international: PCT/EP2016/060595
(87) Numéro de publication internationale: WO 2016/184755

(56) Documents cités:
- WO-A1-2012/017399
- WO-A1-2014/203908
- US-A- 5 711 829

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa) et d'allongement à la rupture (allongement total en %) sont effectuées en traction selon la norme ISO 6892 de 1984.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former une spire dont l'angle de pose par rapport à la direction circonférentielle est inférieur à 8°. Les câbles initialement fabriqués sont enduits d'un mélange caoutchouteux avant d'être mis en place. Ce mélange caoutchouteux vient ensuite pénétrer le câble sous l'effet de la pression et de la température lors de la cuisson du pneumatique.

Les résultats ainsi obtenus en termes d'endurance et d'usure lors de roulages prolongés sur routes à grande vitesse sont le plus souvent satisfaisants. Toutefois, il apparaît que dans certaines conditions de roulage, certains pneumatiques présentent parfois une usure plus prononcée sur une partie de leur bande de roulement. Ce phénomène s'accentue lorsque la largeur de la bande de roulement augmente.

En outre, quelles que soient les solutions envisagées telles que présentées précédemment, la présence d'une couche d'éléments de renforcement supplémentaire conduit à une masse plus importante du pneumatique et à des coûts de fabrication des pneumatiques plus importants.

Le document WO 10/069676 propose une couche d'éléments de renforcement circonférentiels répartis selon un pas variable. Selon les pas choisis, plus espacés dans les parties centrale et intermédiaires de la couche d'éléments de renforcement circonférentiels, il est possible de réaliser des pneumatiques dont les performances en termes d'endurance sont satisfaisantes avec des performances en termes d'usure améliorées. En outre, par rapport à un pneumatique comportant une couche d'éléments de renforcement circonférentiels répartis selon un pas constant, il est possible de diminuer la masse et le coût de tels pneumatiques bien qu'il soit nécessaire de combler l'absence d'éléments de renforcement par des masses polymériques.

Le document WO2012/017399-A1 montre un pneumatique selon le préambule de la revendication 1.

Un but de l'invention est de fournir des pneumatiques pour véhicules "Poids-Lourds", dont les performances d'endurance et d'usure sont conservées, voire améliorées, pour des usages routiers quelles que soient les conditions d'usage, dont la masse est encore réduite par rapport à celle des pneumatiques tels que décrits précédemment et dont les performances en termes de résistance au roulement sont améliorées pour contribuer à une moindre consommation de carburant par les véhicules équipés de tels pneumatiques.

Ce but est atteint selon l'invention par un pneumatique à armature de carcasse radiale pour véhicule de type poids lourd comprenant une armature de sommet comportant au moins trois couches de sommet de travail, chacune formée d'éléments de renforcement insérés entre deux couches de calandrage de mélange caoutchouteux, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, dans un plan méridien, l'épaisseur desdites au moins trois couches de sommet de travail mesurée dans le plan équatorial étant inférieure à 5 mm, les éléments de renforcements desdites au moins trois couches de sommet de travail étant des fils métalliques unitaires de diamètre inférieur à 0.50 mm, la distance entre les éléments de renforcement, mesurée selon la normale à la direction de la ligne moyenne du fil, étant strictement inférieure à 1 mm, la largeur axiale de chacune desdites au moins trois couches de sommet de travail étant supérieure à 60 % de la largeur axiale de la bande de roulement, le module d'élasticité sous tension à 10 % d'allongement d'au moins une couche de calandrage d'au moins une couche de sommet de travail est inférieur à 8.5 MPa mesuré selon la norme AFNDR-NFT-46002 de septembre 1988 et la valeur maximale de tan(δ), noté tan(δ)ₘₐₓ, de ladite au moins une couche de calandrage d'au moins une couche de sommet de travail est inférieure à 0.100, mesurée selon la norme ASTM D 5992-96.

De préférence, selon l'invention, dans un plan méridien, l'épaisseur desdites au moins trois couches de sommet de travail mesurée dans le plan équatorial est inférieure à 3.5 mm.

De préférence également selon l'invention, la distance entre les éléments de renforcement, mesurée selon la normale à la direction de la ligne moyenne du fil, est inférieure à 0.5 mm.

De préférence encore selon l'invention, la largeur axiale de chacune desdites au moins trois couches de sommet de travail est supérieure à 80 et de préférence inférieure à 95 % de la largeur axiale de la bande de roulement.

Les largeurs axiales des couches d'éléments de renforcement sont mesurées sur une coupe transversale d'un pneumatique, le pneumatique étant donc dans un état non gonflé.

La largeur axiale de la bande de roulement est mesurée entre deux extrémités d'épaulement lorsque le pneumatique est monté sur sa jante de service et gonflé à sa pression nominale.

Une extrémité d'épaulement est définie, dans la zone de l'épaule du pneumatique, par la projection orthogonale sur la surface extérieure du pneumatique de l'intersection des tangentes aux surfaces d'une extrémité axialement extérieure de la bande de roulement (sommet des sculptures) d'une part et de l'extrémité radialement extérieure d'un flanc d'autre part.

Le facteur de perte tan(δ) est une propriété dynamique de la couche de mélange caoutchouteux. Il est mesuré sur un viscoanalyseur, connu sous le nom commercial « Metravib VA4000 », selon la norme ASTM D 5992-96. On enregistre la réponse d'un échantillon de composition vulcanisée (éprouvette cylindrique de 2 mm d'épaisseur et de 78 mm² de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour). Pour le cycle retour, on indique la valeur maximale de tan(δ) observée, noté tan(δ)ₘₐₓ.

La résistance au roulement est la résistance qui apparaît lorsque le pneumatique roule. Elle est représentée par les pertes hystérétiques liées à la déformation du pneumatique durant une révolution. Les valeurs de fréquence liées à la révolution du pneumatique correspondent à des valeurs de tan(δ) mesurée entre 30 et 100°C. La valeur de tan(δ) à 100 °C correspond ainsi à un indicateur de la résistance au roulement du pneumatique en roulage.

Il est encore possible d'estimer la résistance au roulement par la mesure des pertes d'énergie par rebond des échantillons à énergie imposée à des températures de 60 °C et exprimées en pourcentage.

Avantageusement selon l'invention, la perte à 60 °C, notée P60, de ladite au moins une couche de calandrage d'au moins une couche de sommet de travail est inférieure à 20 %.

Habituellement, les modules d'élasticité sous tension à 10 % d'allongement des calandrages des couches de sommet sont supérieurs à 8.5 MPa et le plus souvent supérieurs à 10 MPa. De tels modules d'élasticité sont notamment requis pour permettre de limiter les mises en compression des éléments de renforcement des couches de sommet de travail notamment lorsque le véhicule suit un parcours sinueux, lors de manoeuvres sur les parkings ou bien lors du passage de ronds-points. En effet, les cisaillements selon la direction axiale qui s'opèrent sur la bande de roulement dans la zone de la surface de contact avec le sol conduisent à la mise en compression des éléments de renforcement d'une couche de sommet de travail.

De préférence selon l'invention, l'armature de sommet comporte quatre couches de sommet de travail d'éléments de renforcement, l'épaisseur desdites quatre couches de sommet de travail mesurée dans le plan équatorial étant inférieure à 5 mm.

De préférence encore selon l'invention, les modules d'élasticité sous tension à 10 % d'allongement des deux couches de calandrage de chacune des quatre couches de sommet de travail sont inférieurs à 8.5 MPa et les valeurs maximales de tan(δ), noté tan(δ)ₘₐₓ, desdites deux couches de calandrage de chacune des quatre couches de sommet de travail sont inférieures à 0.100.

Les résultats obtenus avec des pneumatiques conformes à l'invention ont effectivement mis en évidence qu'à performances au moins équivalentes en termes d'endurance et d'usure, les pneumatiques selon l'invention présentent une masse inférieure et donc des coûts de fabrication réduits.

Les inventeurs ont su mettre en évidence que cet allégement du pneumatique est liée à une diminution de l'épaisseur de l'armature de sommet du fait de la réduction du diamètre des éléments de renforcement des couches de travail. Cette diminution du diamètre des éléments de renforcement s'associe à des épaisseurs de mélange polymérique réduites par rapport à celles des pneumatiques usuels et ainsi une épaisseur globale de l'armature sommet inférieure à celle des pneumatiques usuels malgré la présence de quatre couches de sommet de travail.

Les inventeurs ont notamment su mettre en évidence qu'il était possible de réduire les distances entre les éléments de renforcement au sein d'une même couche de sommet de travail par rapport à des conceptions plus usuelles sans nuire aux propriétés d'endurance du pneumatique. Il est en effet usuel de maintenir une distance minimum entre les éléments de renforcement d'une même couche de travail pour limiter les phénomènes de propagation de fissures d'un élément à l'autre.

Les inventeurs pensent que la présence d'au moins trois couches de travail diminue les risques d'apparition de fissures au niveau des extrémités des couches de travail du fait de la répartition des contraintes entre les différentes paires de couches de travail soumises à des effets de clivage. Cette diminution de l'amorce de fissure conduit ainsi à la possibilité de réduire les distances entre les éléments de renforcement.

Cette diminution des distances entre les éléments de renforcement d'une même couche de travail contribue à la diminution du volume de mélange polymérique et donc favorise la diminution de la masse du pneumatique.

Par ailleurs, la distance entre les éléments de renforcement, définie selon l'invention, associée au nombre de couches de sommet de travail permettent de conserver des propriétés de rigidité circonférentielle semblables à celles d'un pneumatique de conception plus usuelle.

Au niveau des épaules du pneumatique, la rigidité circonférentielle conférée par l'armature de sommet est même supérieure à celle obtenue avec des pneumatiques usuels. Les inventeurs pensent qu'encore une fois la présence d'au moins trois couches de travail, conduisant à une répartition des contraintes entre les différentes paires de couches de travail soumises à des effets de clivage et donc à une diminution des contraintes entre chaque paire de couches de travail, permet de limiter les déplacements relatifs de deux couches de travail formant une paire adjacente et ainsi assure un couplage efficient au plus près des extrémités desdites couches de travail.

Les inventeurs ont su mettre en évidence que la présence d'au moins trois couches de travail autorise des choix de modules d'élasticité des mélanges caoutchouteux des couches de calandrage des couches de sommet de travail plus faibles sans nuire aux propriétés d'endurance du pneumatique du fait des mises en compression des éléments de renforcement desdites couches de sommet de travail telles que décrites précédemment.

Les inventeurs ont encore su mettre en évidence que la cohésion de ladite au moins une couche de calandrage d'au moins une couche de sommet de travail, lorsqu'elle présente un module d'élasticité sous tension à 10 % d'allongement inférieur à 8.5 MPa, reste satisfaisante.

Au sens de l'invention, un mélange caoutchouteux cohésif est un mélange caoutchouteux notamment robuste à la fissuration. La cohésion d'un mélange est ainsi évaluée par un test de fissuration en fatigue réalisé sur une éprouvette « PS » (pure shear). Il consiste à déterminer, après entaillage de l'éprouvette, la vitesse de propagation de fissure « Vp » (nm/cycle) en fonction du taux de restitution d'énergie « E » (J/m²). Le domaine expérimental couvert par la mesure est compris dans la plage -20°C et +150°C en température, avec une atmosphère d'air ou d'azote. La sollicitation de l'éprouvette est un déplacement dynamique imposé d'amplitude comprise entre 0.1mm et 10mm sous forme de sollicitation de type impulsionnel (signal « haversine » tangent) avec un temps de repos égal à la durée de l'impulsion ; la fréquence du signal est de l'ordre de 10Hz en moyenne.

La mesure comprend 3 parties :
- Une accommodation de l'éprouvette « PS », de 1000 cycles à 27% de déformation.
- une caractérisation énergétique pour déterminer la loi « E » = f (déformation). Le taux de restitution d'énergie « E » est égal à W0^{∗}h0, avec W0 = énergie fournie au matériau par cycle et par unité de volume et h0 = hauteur initiale de l'éprouvette. L'exploitation des acquisitions « force / déplacement » donne ainsi la relation entre « E » et l'amplitude de la sollicitation.
- La mesure de fissuration, après entaillage de l'éprouvette « PS ». Les informations recueillies conduisent à déterminer la vitesse de propagation de la fissure « Vp » en fonction du niveau de sollicitation imposé « E ».

Les inventeurs ont notamment mis en évidence que la présence d'au moins trois couches de travail contribue à une moindre évolution de la cohésion de ladite au moins une couche de calandrage d'au moins une couche de sommet de travail. En effet, les conceptions de pneumatiques plus usuelles comportant notamment des couches de calandrage des couches de sommet de travail avec des modules d'élasticité sous tension à 10 % d'allongement supérieurs à 8.5 MPa, conduisent à une évolution de la cohésion desdites couches de calandrage des couches de sommet de travail, celle-ci tendant à s'affaiblir. Les inventeurs constatent que la présence d'au moins trois couches de travail limite d'une part les mises en compression des éléments de renforcement des couches de sommet de travail notamment lorsque le véhicule suit un parcours sinueux. Et d'autre part, la présence d'au moins trois couches de travail qui limite les déplacements entre les extrémités des couches de sommet de travail associée à une valeur maximale de tan(δ) d'au moins une couche de calandrage inférieure à 0.100 conduit à une faible évolution de la cohésion de ladite au moins une couche de calandrage du fait d'une limitation des augmentations de température. Les inventeurs considèrent ainsi que la cohésion d'au moins une couche de calandrage d'au moins une couche de sommet de travail, plus faible que ce qui existe dans les conceptions de pneumatiques plus usuelles, est satisfaisante dans la conception du pneumatique selon l'invention.

Les inventeurs constatent encore que lorsque les deux couches de calandrage des quatre couches de sommet de travail présentent un module d'élasticité sous tension à 10 % d'allongement inférieur à 8.5 MPa et une valeur maximale de tan(δ), noté tan(δ)ₘₐₓ, inférieure à 0.100, les performances en termes de résistance au roulement sont améliorées en conservant des propriétés d'endurance et d'usure satisfaisantes.

Les inventeurs ont encore mis en évidence que la rigidité circonférentielle plus importante aux épaules permet d'améliorer les propriétés du pneumatique en termes d'usure. En effet, l'apparition d'inhomogénéités d'usure entre le centre et le bord de la bande de roulement apparaissant dans certaines conditions de roulage est diminuée par rapport à ce que l'on peut observer sur des conceptions plus usuelles. La diminution des diamètres des éléments de renforcement des couches de travail permet encore de diminuer la sensibilité du pneumatique aux agressions de la bande de roulement, l'architecture sommet étant selon l'invention globalement plus souple qu'avec des pneumatiques plus usuels.

Selon un mode de réalisation préféré de l'invention, ladite au moins une couche de calandrage d'au moins une couche de sommet de travail est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET supérieure à 60 m²/g,
   i. employé à un taux compris entre 20 et 40 pce lorsque l'indice de structure du noir (COAN) est supérieur à 85,
   ii. employé à un taux compris entre 20 et 60 pce lorsque l'indice de structure du noir (COAN) est inférieur à 85,
b) soit par du noir de carbone de surface spécifique BET inférieure à 60 m²/g, quelle que soit son indice de structure, employé à un taux compris entre 20 et 80 pce, et de préférence entre 30 et 50 pce,
c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m²/g employée à un taux compris entre 20 et 80 pce, et de préférence entre 30 et 50 pce,
d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

La mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987.

L'indice de structure du noir COAN (Compressed Oil Absorption Number) est mesuré selon la norme ASTM D3493.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m²/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Selon ce mode de réalisation préféré de l'invention, un module d'élasticité plus faible s'accompagne généralement d'un module visqueux G" plus faible, cette évolution s'avérant favorable à une réduction de la résistance au roulement du pneumatique.

Le pneumatique selon l'invention tel qu'il vient d'être décrit présente donc une résistance au roulement améliorée par rapport aux pneumatiques usuels tout en conservant des performances en termes d'endurance et d'usure comparables.

En outre, les modules d'élasticité plus faibles des couches de calandrage des couches de sommet de travail permettent encore d'assouplir le sommet du pneumatique et ainsi de limiter les risques d'agressions du sommet et de corrosion des éléments de renforcement des couches d'armature de sommet lorsque par exemple des cailloux sont retenus dans les fonds de sculpture.

Avantageusement selon l'invention, pour obtenir des rigidités circonférentielles satisfaisantes, quelles que soient les conditions de roulage, le diamètre des fils métalliques unitaires des quatre couches de sommet de travail est supérieur ou égal à 0.25 mm.

Avantageusement selon l'invention, la rigidité par unité de largeur de chacune des couches de sommet de travail est comprise entre 35 et 70 daN/mm.

La rigidité par unité de largeur d'une couche d'éléments de renforcement est déterminée à partir des mesures effectuées sur les éléments de renforcement et de la densité d'éléments de renforcement de la couche, elle-même définie par le nombre d'éléments de renforcement par unité de largeur.

La mesure de densité s'effectue en comptant visuellement le nombre de fils présents sur un échantillon de tissu non déformé d'une largeur de 10 cm. Le nombre de fils comptés est directement la valeur de densité du tissu en fils/dm.

Selon un mode de réalisation préféré de l'invention, notamment pour optimiser les gains en masse du pneumatique, une couche de sommet de travail d'éléments de renforcement comportant deux couches de calandrage entre lesquelles sont positionnés les éléments de renforcement, l'épaisseur de calandrage mesurée selon une direction radiale de part et d'autre d'un élément de renforcement est inférieure à 0.30 mm. Sur un pneumatique, la mesure de l'épaisseur de calandrage est obtenue en divisant par deux la distance entre les éléments de renforcement de deux couches d'éléments de renforcement au contact l'une de l'autre.

De préférence encore selon l'invention, l'angle moyen formé par les éléments de renforcement desdites au moins deux couches de travail avec la direction circonférentielle est inférieur à 30°. De telles valeurs d'angles permettent de limiter encore les déplacements relatifs de deux couches de travail du fait d'une plus grande rigidité circonférentielle.

Selon un mode de réalisation avantageux de l'invention, une couche de mélange caoutchouteux est disposée entre au moins les extrémités de deux couches de sommet de travail.

La couche de mélange caoutchouteux permet d'obtenir un découplage desdites couches de sommet de travail afin de répartir les contraintes de cisaillement sur une plus grande épaisseur. Ces contraintes de cisaillement apparaissent notamment du fait de tensions circonférentielles lors du passage dans l'aire de contact.

Au sens de l'invention des couches couplées sont des couches dont les éléments de renforcement respectifs sont séparés radialement l'un de l'autre par la seule présence des couches de calandrage desdites couches. En d'autres termes, des couches couplées sont au contact l'une de l'autre.

La présence de cette couche de mélange caoutchouteux permet notamment de limiter les contraintes de cisaillement entre les extrémités des couches de sommet de travail, les rigidités circonférentielles desdites couches de sommet de travail étant nulles à leur extrémité.

Avantageusement encore selon l'invention, une couche de mélange caoutchouteux est disposée entre les extrémités de deux couches de sommet de travail adjacentes. En d'autres termes, selon cette réalisation avantageuse de l'invention et dans le cas de quatre couches de sommet de travail, trois couches de mélange caoutchouteux sont présentes entre les extrémités des quatre couches de sommet de travail.

Les couches de mélange caoutchouteux disposées entre les extrémités de deux couches de sommet de travail peuvent être identiques ou bien présenter des épaisseurs mesurées selon la direction radiale en extrémité de la couche la plus étroite variant d'une paire de couches de sommet de travail à l'autre.

Selon une première variante de réalisation de l'invention dans le cas de quatre couches de sommet de travail, les deux couches de sommet de travail radialement entre une couche de sommet de travail radialement la plus intérieure et une couche de sommet de travail radialement la plus extérieure sont axialement plus étroites que les deux couches de sommet de travail radialement la plus intérieure et radialement la plus extérieure. La couche de sommet de travail radialement la plus intérieure est alors avantageusement la couche axialement la plus large. Cette première variante de réalisation favorise une moindre dissipation thermique au niveau de la zone de l'épaule du pneumatique.

Selon une deuxième variante de réalisation de l'invention dans le cas de quatre couches de sommet de travail, les deux couches de sommet de travail radialement la plus intérieure et radialement la plus extérieure sont axialement plus étroites que les deux couches de sommet de travail radialement entre la couche de sommet de travail radialement la plus intérieure et la couche de sommet de travail radialement la plus extérieure. Cette deuxième variante de réalisation est particulièrement pertinente pour limiter les dégradations dues à des chocs trottoirs. Soit la couche de sommet de travail adjacente à la couche radialement la plus intérieure est la couche axialement la plus large ; une telle configuration permet d'éloigner les extrémités des couches de travail de la zone de l'impact. Soit la couche de sommet de travail adjacente à la couche radialement la plus extérieure est la couche axialement la plus large ; une telle configuration permet alors d'éloigner les extrémités soumises à l'impact de l'armature de carcasse qui pourrait être impactée.

Selon d'autres variantes de réalisations de l'invention dans le cas de quatre couches de sommet de travail, une couche de sommet de travail radialement intérieure ou extérieure aux autres couches de sommet de travail et une couche de sommet de travail radialement entre les couches de sommet de travail radialement intérieure et extérieure sont axialement plus larges que les deux autres couches de sommet de travail.

Selon un mode de réalisation de l'invention, l'armature de sommet est complétée par une couche d'éléments de renforcement circonférentiels.

La présence d'une couche d'éléments de renforcement circonférentiels est contraire à l'allégement du pneumatique et décale alors le compromis de performances entre l'allégement et les propriétés d'endurance du pneumatique ; la couche d'éléments de renforcement circonférentiels peut permettre d'améliorer l'endurance du pneumatique pour des usages particulièrement sollicitant.

De préférence, au moins une couche d'éléments de renforcement circonférentiels est radialement disposée entre deux couches de sommet de travail.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement, la contrainte de traction correspondant à la tension mesurée, avec une pré-tension de 5N, ramenée à la section de métal de l'élément de renforcement.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,4% et 0,7%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de construction 3x(0.26+6x0.23) 5.0/7.5 SS. Un tel câble présente un module sécant à 0,7 % égal à 45 GPa et un module tangent maximum égal à 100 GPa, mesurés sur une courbe contrainte de traction en fonction de l'allongement, la contrainte de traction correspondant à la tension mesurée, avec une pré-tension de 5N, ramenée à la section de métal de l'élément de renforcement, de 0.98 mm² dans le cas de l'exemple considéré.

Selon un deuxième mode de réalisation de l'invention, les éléments de renforcement circonférentiels peuvent être formées d'éléments métalliques et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Une réalisation préférée de l'invention prévoit encore que l'armature de sommet est complétée radialement à l'extérieur par au moins une couche supplémentaire, dite de protection, d'éléments de renforcement, orientés par rapport à la direction circonférentielle avec un angle compris entre 10° et 45° et de même sens que l'angle formé par les éléments de la couche de travail qui lui est radialement adjacente.

Selon un premier mode de réalisation de l'invention, correspondant à des conceptions usuelles des pneumatiques, les éléments de renforcement de la couche de protection sont des câbles élastiques.

Selon un deuxième mode de réalisation de l'invention, les éléments de renforcement de la couche de protection sont des fils métalliques unitaires de diamètre inférieur à 0.50 mm, la distance entre les éléments de renforcement, mesurée selon la normale à la direction de la ligne moyenne du fil, étant strictement inférieure à 1.5 mm.

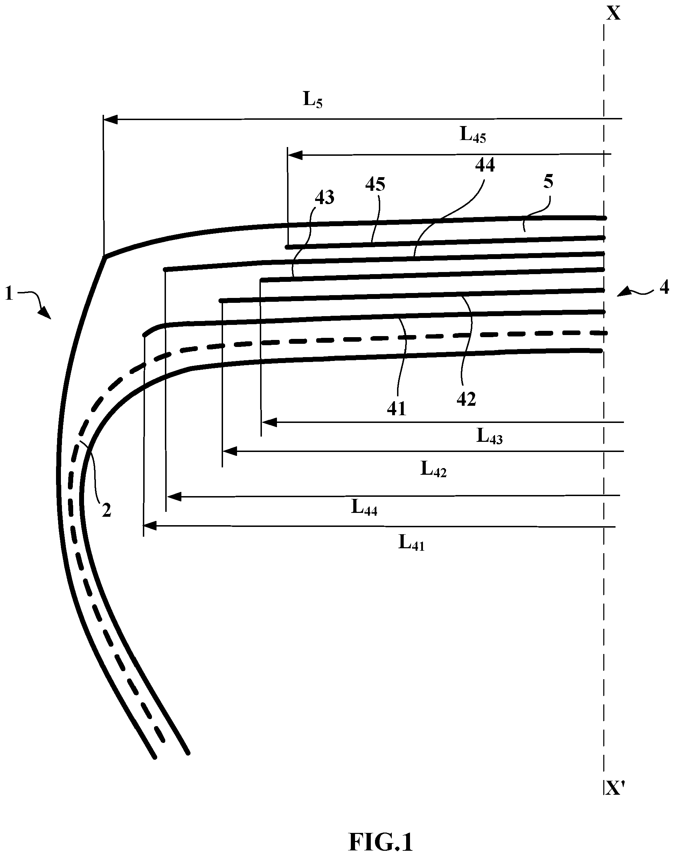

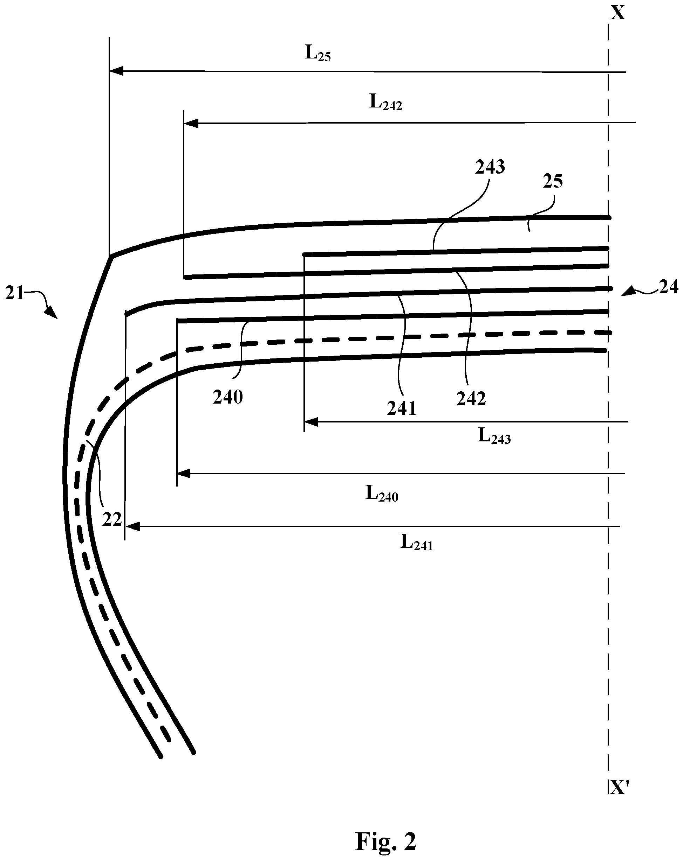

D'autres détails et caractéristiques avantageux de l'invention ressortiront ci-après de la description des exemples de réalisation de l'invention en référence aux figures 1 et 2 qui représentent :
- figure 1, une vue méridienne d'un schéma d'un pneumatique selon un mode de réalisation de l'invention,
- figure 2, une vue méridienne d'un schéma d'un pneumatique selon l'art antérieur.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

Sur les figures 1 et 2, les pneumatiques 1, 21, de dimension 385/55 R 22.5, ont un rapport de forme H/S égal à 0,55, H étant la hauteur du pneumatique 1 sur sa jante de montage et S sa largeur axiale maximale. Lesdits pneumatiques 1, 21 comprennent une armature de carcasse radiale 2, 22 ancrée dans deux bourrelets, non représentés sur les figures. L'armature de carcasse 2, 22 est formée d'une seule couche de câbles métalliques. Ils comportent encore une bande de roulement 5, 25.

Sur la figure 1, l'armature de carcasse 2 est frettée conformément à l'invention par une armature de sommet 4, formée radialement de l'intérieur à l'extérieur :
- d'une première couche de travail 41 formée de fils métalliques orientés d'un angle égal à 18°,
- d'une deuxième couche de travail 42 formée de fils métalliques orientés d'un angle égal à -18°,
- d'une troisième couche de travail 43 formée de fils métalliques orientés d'un angle égal à 18°,
- d'une quatrième couche de travail 44 formée de fils métalliques orientés d'un angle égal à -18°,
- d'une couche de protection 45 formées de câbles métalliques élastiques 6.35, parallèles aux fils métalliques de la couche de travail 44.

Les fils métalliques constituant les éléments de renforcement des quatre couches de travail sont des fils de type UHT présentant un diamètre de 0.35 mm. Des fils de type SHT ou de grades supérieurs pourraient encore être utilisés. Ils sont répartis dans chacune des couches de travail avec une distance entre les éléments de renforcement, mesurée selon la normale à la direction de la ligne moyenne du fil égale à 0.35 mm.

La largeur axiale L₂₄₁ de la première couche de travail 241 est égale à 300 mm.

La largeur axiale L₂₄₂ de la deuxième couche de travail 242 est égale à 320 mm.

La largeur axiale L₂₄₃ de la troisième couche de travail 243 est égale à 300 mm.

La largeur axiale L₂₄₄ de la quatrième couche de travail 244 est égale à 280 mm.

La largeur axiale L₂₄₅ de la couche de protection 245 est égale à 220 mm.

La largeur axiale de la bande de roulement L₂₅ est égale à 312 mm.

L'épaisseur des quatre couches de sommet de travail mesurée dans le plan équatorial est égale à 3.3 mm et donc inférieure à 5 mm.

Les couches de calandrage des quatre couches de travail 41, 42, 43, 44 sont constituées d'un mélange caoutchouteux conformément à l'invention dont le module d'élasticité sous tension à 10 % d'allongement est inférieur à 8.5 MPa et dont la valeur maximale de tan(δ), noté tan(δ)ₘₐₓ, est inférieure à 0.100

Sur la figure 2, l'armature de carcasse 22 est frettée par une armature de sommet 24, formée radialement de l'intérieur à l'extérieur :
- d'une première couche de triangulation 240 formée de câbles métalliques 9.35 non frettés orientés d'un angle égal à 50°,
- d'une première couche de travail 241 formée de câbles métalliques 9.35 non frettés, continus sur toute la largeur de la nappe, orientés d'un angle égal à 18°,
- d'une seconde couche de travail 242 formée de câbles métalliques 9.35 non frettés, continus sur toute la largeur de la nappe, orientés d'un angle égal à 18° et croisés avec les câbles métalliques de la couche 241,
- d'une couche de protection 243 formée de câbles métalliques élastiques 6.35.

Les câbles métalliques inextensibles 9.35 des couches de travail 241 et 242 sont sont répartis dans chacune des couches de travail avec une distance entre les éléments de renforcement, mesurée selon la normale à la direction de la ligne moyenne du fil égale à 1 mm.

La largeur axiale L₂₄₀ de la couche de triangulation 240 est égale à 302 mm.

La largeur axiale L₂₄₁ de la première couche de travail 241 est égale à 318 mm.

La largeur axiale L₂₄₂ de la deuxième couche de travail 242 est égale à 296 mm.

La largeur axiale L₂₄₃ de la couche de protection 243 est égale à 220 mm.

La largeur axiale de la bande de roulement L₅ est égale à 312 mm.

L'épaisseur des trois couches de sommet 240, 241, 242 mesurée dans le plan équatorial est égale à 6.5 mm.

La masse cumulée des quatre couches de travail 41, 42, 43 et 44, comprenant la masse des fils métalliques et des mélanges de calandrage, se monte ainsi à 6.3 Kg. La masse du pneumatique selon l'invention réalisé conformément à la représentation de la figure 1 est égale à 61 Kg.

La masse cumulée des couches de sommet 240, 241, 242 comprenant la masse des câbles métalliques et des mélanges de calandrage, se monte à 12.6 Kg. La masse du pneumatique réalisé conformément à la représentation de la figure 2 est égale à 67 Kg.

Des essais ont été réalisés avec chacun de ces pneumatiques, le pneumatique réalisé conformément à la figure 2 étant le pneumatique de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance à celles des pneumatiques de référence.

D'autres tests ont été réalisés pour évaluer, en conditions réelles sur véhicules, les performances en usure des pneumatiques. Les conditions de roulage, notamment le circuit emprunté, sont déterminées pour être représentatives d'un type d'usage particulier, en la circonstance un usage de type autoroutier plus pénalisant vis-à-vis de l'usure irrégulière. A l'issue des roulages, on constate une meilleure régularité de l'usure des pneumatiques selon l'invention qui se traduit par un potentiel de durée de vie supplémentaire.

Par ailleurs, des mesures de résistance au roulement ont été effectuées.

Ces essais sont réalisés avec des pneumatiques selon l'invention en faisant varier les caractéristiques des mélanges des couches de calandrage des quatre couches de travail 41, 42, 43, 44, notamment leur module d'élasticité sous tension à 10 % d'allongement et la valeur tan(δ)ₘₐₓ, conformément à l'invention.

Les différents mélanges utilisés sont listés ci-après, en exprimant pour chacun le module d'élasticité sous tension à 10 % d'allongement ainsi que les valeurs tan(δ)ₘₐₓ et P60.

| | Mélange R1 | Mélange 1 | Mélange 2 | Mélange 3 | Mélange 4 | Mélange 5 |
|---|---|---|---|---|---|---|
| NR | 100 | 100 | 100 | 100 | 100 | 100 |
| Noir N347 | 52 | | 33 | | | |
| Noir N683 | | | | | 44 | 30 |
| Noir N326 | | 47 | | | | |
| Silice 165G | | | | 46 | | |
| Antioxydant (6PPD) | 1 | 1.5 | 1 | 2 | 1 | 1 |
| Acide stéarique | 0.65 | 0.9 | 0.65 | 1 | 0.65 | 0.65 |
| Oxyde de zinc | 9.3 | 7.5 | 9.3 | 8 | 9.3 | 9.3 |
| Sel de Cobalt (AcacCo) | 1.12 | 1.12 | 1.12 | 1.1 | 1.12 | 1.12 |
| Sel de Cobalt (AbietateCo) | | | | | | |
| Silane sur noir | | | | 8.3 | | |
| soufre | 6.1 | 4.5 | 6.1 | 4.8 | 6.1 | 6.1 |
| Accélérateur DCBS | 0.93 | 0.8 | 0.93 | | 0.93 | 0.93 |
| Accélérateur TBBS | | | | 1.01 | | |
| Co-accélérateur DPG | | | | 1.1 | | |
| Retardateur CTP PVI) | 0.25 | 0.15 | 0.25 | 0.2 | 0.25 | 0.25 |
| MA₁₀(MPa) | 10.4 | 5.99 | 5.56 | 7.25 | 6.16 | 4.4 |
| tan(δ)ₘₐₓ | 0.130 | 0.099 | 0.074 | 0.063 | 0.056 | 0.030 |
| P60 (%) | 22.9 | 18.7 | 14.9 | 13.3 | 12.2 | 8.5 |

Les valeurs des constituants sont exprimées en pce (parties en poids pour cent parties d'élastomères.

Concernant le pneumatique de référence, noté T, les couches de calandrages des couches de travail sont constituées du mélange R1.

Différents pneumatiques I selon l'invention ont été testés, les couches de calandrage des couches de travail étant constituées des mélanges 1 à 5.

Les résultats des mesures sont présentés dans le tableau suivant ; elles sont exprimées en Kg/t, une valeur de 100 étant attribuée au pneumatique T.

| Pneumatique T | Pneumatique I |
|---|---|
| 100 | 97 |

## Revendications

1. Pneumatique (1) à armature de carcasse radiale (2) pour véhicule de type poids lourd comprenant une armature de sommet (4) comportant au moins trois couches de sommet de travail (41, 42, 43, 44), chacune formée d'éléments de renforcement insérés entre deux couches de calandrage de mélange caoutchouteux, croisés d'une couche à l'autre en faisant avec la direction circonférentielle des angles compris entre 10° et 45°, elle-même coiffée radialement d'une bande de roulement (5), ladite bande de roulement étant réunie à deux bourrelets par l'intermédiaire de deux flancs, où, dans un plan méridien, l'épaisseur desdites au moins trois couches de sommet de travail (41, 42, 43, 44) mesurée dans le plan équatorial est inférieure à 5 mm, où la largeur axiale (L₄₁, L₄₂, L₄₃, L₄₄) de chacune desdites au moins trois couches de sommet de travail (41, 42, 43, 44) est supérieure à 60 % de la largeur axiale (L5) de la bande de roulement, **caractérisé en ce que** les éléments de renforcement desdites au moins trois couches de sommet de travail (41, 42, 43, 44) sont des fils métalliques unitaires de diamètre inférieur à 0.50 mm, **en ce que** la distance entre les éléments de renforcement, mesurée selon la normale à la direction de la ligne moyenne du fil, est strictement inférieure à 1 mm et **en ce que** le module d'élasticité sous tension à 10 % d'allongement d'au moins une couche de calandrage d'au moins une couche de sommet de travail (41, 42, 43, 44) est inférieur à 8.5 MPa mesuré selon la norme AFNDR-NFT-46002 de septembre 1988 et **en ce que** la valeur maximale de tan(δ), noté tan(δ)ₘₐₓ, de ladite au moins une couche de calandrage est inférieure à 0.100 mesurée selon la norme ASTM D 5992-96.

2. Pneumatique (1) selon la revendication 1, **caractérisé en ce que** l'armature de sommet (4) comporte quatre couches de sommet de travail (41, 42, 43, 44) d'éléments de renforcement, où le diamètre des fils métalliques unitaires des quatre couches de sommet de travail (41, 42, 43, 44) est supérieur ou égal à 0.25 mm.

3. Pneumatique (1) selon la revendication 1 ou 2, une couche de sommet de travail d'éléments de renforcement comportant deux couches de calandrage entre lesquelles sont positionnés les éléments de renforcement, **caractérisé en ce que** l'épaisseur de calandrage mesurée selon une direction radiale de part et d'autre d'un élément de renforcement est inférieure à 0.30 mm.

4. Pneumatique (1) selon l'une des revendications 1 à 3, **caractérisé en ce que** la rigidité par unité de largeur de chacune des couches de sommet de travail (41, 42, 43, 44) est comprise entre 35 et 70 daN/mm.

5. Pneumatique (1) selon l'une des revendications précédentes, **caractérisé en ce que** l'armature de sommet (4) comporte quatre couches de sommet de travail (41, 42, 43, 44) d'éléments de renforcement.

6. Pneumatique (1) selon la revendication 5, **caractérisé en ce que** les modules d'élasticité sous tension à 10 % d'allongement des deux couches de calandrage de chacune des quatre couches de sommet de travail (41, 42, 43, 44) sont inférieurs à 8.5 MPa et **en ce que** les valeurs maximales de tan(δ), noté tan(δ)ₘₐₓ, des deux couches de calandrage de chacune des quatre couches de sommet de travail (41, 42, 43, 44) sont inférieures à 0.100.

7. Pneumatique (1) selon l'une des revendications précédentes, **caractérisé en ce que** ladite au moins une couche de calandrage d'au moins une couche de sommet de travail (41, 42, 43, 44) est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :
a) soit par du noir de carbone de surface spécifique BET supérieure à 60 m²/g,
i. employé à un taux compris entre 20 et 40 pce lorsque l'indice de structure du noir (COAN) est supérieur à 85,
ii. employé à un taux compris entre 20 et 60 pce lorsque l'indice de structure du noir (COAN) est inférieur à 85,
b) soit par du noir de carbone de surface spécifique BET inférieure à 60 m²/g, quelle que soit son indice de structure, employé à un taux compris entre 20 et 80 pce, et de préférence entre 30 et 50 pce,
c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m²/g employée à un taux compris entre 20 et 80 pce, et de préférence entre 30 et 50 pce,
d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

8. Pneumatique (1) selon l'une des revendications précédentes, **caractérisé en ce que** l'armature de sommet (4) est complétée par une couche d'éléments de renforcement circonférentiel.

9. Pneumatique (1) selon la revendication 8, **caractérisé en ce que** la couche d'éléments de renforcement circonférentiels est radialement disposée entre deux couches de sommet de travail.

10. Pneumatique (1) selon l'une des revendications 8 ou 9, **caractérisé en ce que** les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa selon la norme ISO 6892 de 1984.

11. Pneumatique (1) selon l'une des revendications précédentes, **caractérisé en ce que** l'armature de sommet (4) est complétée radialement à l'extérieur par au moins une nappe supplémentaire (45), dite de protection, d'éléments de renforcement, orientés par rapport à la direction circonférentielle avec un angle compris entre 10° et 45° et de même sens que l'angle formé par les éléments de renforcement de la couche de sommet de travail (44) qui lui est radialement adjacente.

## Patentansprüche

1. Reifen (1) mit radialer Karkassenbewehrung (2) für ein Schwerlastfahrzeug, welcher eine Scheitelbewehrung (4) umfasst, die wenigstens drei Arbeitsscheitelschichten (41, 42, 43, 44) aufweist, die jeweils von zwischen zwei Kalandrierschichten aus Kautschukmischung eingefügten Verstärkungselementen gebildet werden, die sich von einer Schicht zur anderen überkreuzen und dabei mit der Umfangsrichtung Winkel zwischen 10° und 45° bilden, und die ihrerseits radial von einem Laufstreifen (5) bedeckt ist, wobei der Laufstreifen über zwei Seitenwände mit zwei Wülsten verbunden ist, wobei in einer Meridianebene die in der Äquatorialebene gemessene Dicke der wenigstens drei Arbeitsscheitelschichten (41, 42, 43, 44) kleiner als 5 mm ist, wobei die axiale Breite (L₄₁, L₄₂, L₄₃, L₄₄) jeder der wenigstens drei Arbeitsscheitelschichten (41, 42, 43, 44) größer als 60 % der axialen Breite (L5) des Laufstreifens ist,
**dadurch gekennzeichnet, dass** die Verstärkungselemente der wenigstens drei Arbeitsscheitelschichten (41, 42, 43, 44) einzelne Drähte mit einem Durchmesser von weniger als 0,50 mm sind, dadurch, dass der Abstand zwischen den Verstärkungselementen, entlang der Normalen zur Richtung der Mittellinie des Drahtes gemessen, streng kleiner als 1 mm ist, und dadurch, dass der Elastizitätsmodul unter Spannung bei 10 % Dehnung wenigstens einer Kalandrierschicht wenigstens einer Arbeitsscheitelschicht (41, 42, 43, 44) kleiner als 8,5 MPa ist, gemessen nach der Norm AFNOR-NFT-46002 vom September 1988, und dadurch, dass der maximale Wert von tan(δ), mit tan(δ)ₘₐₓ bezeichnet, der besagten wenigstens einen Kalandrierschicht kleiner als 0,100 ist, gemessen nach der Norm ASTM D 5992-96.

2. Reifen (1) nach Anspruch 1, **dadurch gekennzeichnet, dass** die Scheitelbewehrung (4) vier Arbeitsscheitelschichten (41, 42, 43, 44) aus Verstärkungselementen aufweist, wobei der Durchmesser der einzelnen Drähte der vier Arbeitsscheitelschichten (41, 42, 43, 44) größer oder gleich 0,25 mm ist.

3. Reifen (1) nach Anspruch 1 oder 2, wobei eine Arbeitsscheitelschicht aus Verstärkungselementen zwei Kalandrierschichten aufweist, zwischen denen die Verstärkungselemente positioniert sind, **dadurch gekennzeichnet, dass** die in einer radialen Richtung gemessene Kalandrierdicke beiderseits eines Verstärkungselements kleiner als 0,30 mm ist.

4. Reifen (1) nach einem der Ansprüche 1 bis 3, **dadurch gekennzeichnet, dass** die Steifigkeit pro Breiteneinheit jeder der Arbeitsscheitelschichten (41, 42, 43, 44) zwischen 35 und 70 daN/mm liegt.

5. Reifen (1) nach einem der vorhergehenden Ansprüche, **dadurch gekennzeichnet, dass** die Scheitelbewehrung (4) vier Arbeitsscheitelschichten (41, 42, 43, 44) aus Verstärkungselementen aufweist.

6. Reifen (1) nach Anspruch 5, **dadurch gekennzeichnet, dass** die Elastizitätsmoduln unter Spannung bei 10 % Dehnung der zwei Kalandrierschichten jeder der vier Arbeitsscheitelschichten (41, 42, 43, 44) kleiner als 8,5 MPa sind, dass die maximalen Werte von tan(δ), mit tan(δ)ₘₐₓ bezeichnet, der zwei Kalandrierschichten jeder der vier Arbeitsscheitelschichten (41, 42, 43, 44) kleiner als 0,100 sind.

7. Reifen (1) nach einem der vorhergehenden Ansprüche, **dadurch gekennzeichnet, dass** die wenigstens eine Kalandrierschicht wenigstens einer Arbeitsscheitelschicht (41, 42, 43, 44) eine Elastomermischung auf der Basis von Naturkautschuk oder von synthetischem Polyisopren mit einer Mehrheit von cis-1,4-Verkettungen und eventuell von mindestens einem weiteren Dienelastomer, wobei der Naturkautschuk oder das synthetische Polyisopren im Falle eines Verschnitts in einem mehrheitlichen Anteil vorhanden ist, bezogen auf den Anteil des anderen oder der anderen verwendeten Dienelastomere, sowie von einem verstärkenden Füllstoff ist, welcher besteht:
a) entweder aus Ruß mit einer spezifischen BET-Oberfläche, die größer als 60 m²/g ist,
i. verwendet in einem Anteil zwischen 20 und 40 pce, wenn der Strukturindex des Rußes (COAN) größer als 85 ist,
ii. verwendet in einem Anteil zwischen 20 und 60 pce, wenn der Strukturindex des Rußes (COAN) kleiner als 85 ist,
b) oder aus Ruß mit einer spezifischen BET-Oberfläche, die kleiner als 60 m²/g ist, gleichgültig, welchen Strukturindex er hat, verwendet in einem Anteil zwischen 20 und 80 pce und vorzugsweise zwischen 30 und 50 pce,
c) oder aus einem hellen Füllstoff vom Typ Kieselsäure und/oder Aluminiumoxid, der funktionelle Oberflächengruppen SiOH und/oder AlOH aufweist, ausgewählt aus der Gruppe, die von den gefällten oder pyrogenen Kieselsäuren, den Aluminiumoxiden oder den Aluminosilikaten oder auch den während oder nach der Synthese modifizierten Rußen mit einer spezifischen BET-Oberfläche zwischen 30 und 260 m²/g gebildet wird, verwendet in einem Anteil zwischen 20 und 80 pce und vorzugsweise zwischen 30 und 50 pce,
d) oder aus einem Verschnitt von unter (a) beschriebenem Ruß und/oder unter (b) beschriebenem Ruß und/oder einem unter (c) beschriebenen hellen Füllstoff, wobei der Gesamtanteil an Füllstoff zwischen 20 und 80 pce und vorzugsweise zwischen 40 und 60 pce liegt.

8. Reifen (1) nach einem der vorhergehenden Ansprüche, **dadurch gekennzeichnet, dass** die Scheitelbewehrung (4) durch eine Schicht von Umfangsverstärkungselementen ergänzt wird.

9. Reifen (1) nach Anspruch 8, **dadurch gekennzeichnet, dass** die Schicht von Umfangsverstärkungselementen radial zwischen zwei Arbeitsscheitelschichten angeordnet ist.

10. Reifen (1) nach einem der Ansprüche 8 oder 9, **dadurch gekennzeichnet, dass** die Verstärkungselemente wenigstens einer Schicht von Umfangsverstärkungselementen metallische Verstärkungselemente sind, die einen Sekantenmodul bei 0,7 % Dehnung zwischen 10 und 120 GPa und einen maximalen Tangentenmodul, der niedriger als 150 GPa ist, gemäß der Norm ISO 6892 von 1984 aufweisen.

11. Reifen (1) nach einem der vorhergehenden Ansprüche, **dadurch gekennzeichnet, dass** die Scheitelbewehrung (4) radial außen durch wenigstens eine zusätzliche Lage (45), Schutzlage genannt, von Verstärkungselementen ergänzt wird, die bezüglich der Umfangsrichtung unter einem Winkel zwischen 10° und 45° und mit derselben Richtung wie der Winkel ausgerichtet sind, der von den Verstärkungselementen der Arbeitsscheitelschicht (44), welche ihr radial benachbart ist, gebildet wird.

## Claims

1. Tyre (1) with a radial carcass reinforcement (2) for a vehicle of the heavy duty type comprising a crown reinforcement (4) comprising at least three working crown layers (41, 42, 43, 44), each formed of reinforcing elements inserted between two skim layers of rubber compound, crossed from one layer to the other, forming with the circumferential direction angles of between 10° and 45°, which is itself capped radially by a tread (5), the said tread being connected to two beads by two sidewalls, wherein, in a meridian plane, the thickness of the said at least three working crown layers (41, 42, 43, 44), measured in the equatorial plane, is less than 5 mm, wherein the axial width (L₄₁, L₄₂, L₄₃, L₄₄) of each of the said at least three working crown layers (41, 42, 43, 44) is greater than 60% of the axial width (L₅) of the tread, **characterized in that** the reinforcing elements of the said at least three working crown layers (41, 42, 43, 44) are individual metal threads of diameter less than 0.50 mm, **in that** the distance between the reinforcing elements, measured along the normal to the direction of the mean line of the thread, is strictly less than 1 mm and **in that** the elastic modulus under tension at 10% elongation of at least one skim layer of at least one working crown layer (41, 42, 43, 44) is less than 8.5 MPa measured according to standard AFNOR-NFT-46002 of September 1988 and **in that** the maximum value for tan(δ), denoted tan(δ)ₘₐₓ, of the said at least one skim layer is less than 0.100 measured according to standard ASTM D 5992-96.

2. Tyre (1) according to Claim 1, **characterized in that** the crown reinforcement (4) comprises four working crown layers (41, 42, 43, 44) wherein the diameter of the individual metal threads of the four working crown layers (41, 42, 43, 44) is greater than or equal to 0.25 mm.

3. Tyre (1) according to Claim 1 or 2, a working crown layer of reinforcing elements comprising two skim layers between which the reinforcing elements are positioned, **characterized in that** the skim thickness measured in a radial direction on each side of a reinforcing element is less than 0.30 mm.

4. Tyre (1) according to one of Claims 1 to 3, **characterized in that** the stiffness per unit width of each of the working crown layers (41, 42, 43, 44) is between 35 and 70 daN/mm.

5. Tyre (1) according to one of the preceding claims, **characterized in that** the crown reinforcement (4) comprises four working crown layers (41, 42, 43, 44) of reinforcing elements.

6. Tyre (1) according to Claim 5, **characterized in that** the values of elastic modulus under tension at 10% elongation of the two skim layers of each of the four working crown layers (41, 42, 43, 44) are less than 8.5 MPa and **in that** the maximum values of tan(δ), denoted tan(δ)ₘₐₓ, of the two skim layers of each of the four working crown layers (41, 42, 43, 44) are less than 0.100.

7. Tyre (1) according to one of the preceding claims, **characterized in that** said at least one skim layer of at least one working crown layer (41, 42, 43, 44) is an elastomeric compound based on natural rubber or synthetic polyisoprene with a majority of cis-1,4 chains, and possibly at least one other diene elastomer, the natural rubber or the synthetic polyisoprene in case of blending being present in a majority proportion relative to the proportion of the other diene elastomer or elastomers used, and a reinforcing filler composed:
a) either of carbon black with a BET specific surface area of greater than 60 m²/g,
i. used at a content of between 20 and 40 phr when the oil absorption number (COAN) of the carbon black is greater than 85,
ii. used at a content of between 20 and 60 phr when the oil absorption number (COAN) of the carbon black is less than 85,
b) or of carbon black with a BET specific surface area of less than 60 m²/g, whatever its oil absorption number, used at a content of between 20 and 80 phr and preferably between 30 and 50 phr,
c) or of a white filler of silica and/or alumina type comprising SiOH and/or AlOH surface functional groups, selected from the group consisting of precipitated or fumed silicas, aluminas and aluminosilicates, or alternatively carbon blacks modified during or after the synthesis having a BET specific surface area of between 30 and 260 m²/g, used at a content of between 20 and 80 phr and preferably between 30 and 50 phr,
d) or of a blend of carbon black described in (a) and/or of carbon black described in (b) and/or a white filler described in (c), in which the overall content of filler is between 20 and 80 phr and preferably between 40 and 60 phr.

8. Tyre (1) according to one of the preceding claims, **characterized in that** the crown reinforcement (4) is supplemented by a layer of circumferential reinforcing elements.

9. Tyre (1) according to Claim 8, **characterized in that** the layer of circumferential reinforcing elements is positioned radially between two working crown layers.

10. Tyre (1) according to either of Claims 8 and 9, **characterized in that** the reinforcing elements of at least one layer of circumferential reinforcing elements are metallic reinforcing elements having a secant modulus at 0.7% elongation in the range from 10 to 120 GPa and a maximum tangent modulus of less than 150 GPa in accordance with standard ISO 6892, 1984.

11. Tyre (1) according to one of the preceding claims, **characterized in that** the crown reinforcement (4) is supplemented radially on the outside by at least one additional ply (45), referred to as a protective ply, of reinforcing elements which are oriented with respect to the circumferential direction at an angle of between 10° and 45° in the same direction as the angle formed by the reinforcing elements of the working crown layer (44) radially adjacent to it.
